Europäisches Patentamt

European Patent Office

Office européen des brevets

(19)

(11) Veröffentlichungsnummer : **0 351 917 B1**

(12)

# EUROPÄISCHE PATENTSCHRIFT

(45) Veröffentlichungstag der Patentschrift :
30.09.92 Patentblatt 92/40

(51) Int. Cl.⁵ : **A23G 9/12,** A23G 9/10,
A23G 9/30, A47J 43/044

(21) Anmeldenummer : 89201872.2

(22) Anmeldetag : 17.07.89

(54) Kleines elektrisches Haushaltsgerät zur Herstellung von Speisen durch rührendes Mischen.

(30) Priorität : 21.07.88 DE 3824821

(43) Veröffentlichungstag der Anmeldung :
24.01.90 Patentblatt 90/04

(45) Bekanntmachung des Hinweises auf die
Patenterteilung :
30.09.92 Patentblatt 92/40

(84) Benannte Vertragsstaaten :
AT DE ES FR GB IT

(56) Entgegenhaltungen :
FR-A- 1 516 840
FR-A- 1 552 996
FR-A- 2 185 366
GB-A- 2 162 296
US-A- 2 815 194

(73) Patentinhaber : **Philips Patentverwaltung
GmbH
Wendenstrasse 35 Postfach 10 51 49
W-2000 Hamburg 1 (DE)**
(84) **DE**
Patentinhaber : **N.V. Philips'
Gloeilampenfabrieken
Groenewoudseweg 1
NL-5621 BA Eindhoven (NL)**
(84) **ES FR GB IT AT**

(72) Erfinder : **Bertram, Leo
Am Sender 10
W-5190 Stolberg (DE)**
Erfinder : **Schemmann, Dr. Hugo
Zwartebergweg 6
NL-Schaesberg (NL)**
Erfinder : **Bukoschek, Romuald Leander
Dr. Pallagasse 28
A-9020 Klagenfurt (AT)**

(74) Vertreter : **Kupfermann, Fritz-Joachim,
Dipl.-Ing. et al
Philips Patentverwaltung GmbH
Wendenstrasse 35 Postfach 10 51 49
W-2000 Hamburg 1 (DE)**

**Beschreibung**

Kleines elektrisches Haushltsgerät zur Herstellung von Speisen durch rührendes Mischen

Die Erfindung bezieht sich auf ein kleines elektrisches Haushaltsgerät zur Herstellung von Speisen durch rührendes Mischen von zu Arbeitsbeginn leicht flüssigen Ausgangskomponenten, bei deren Zubereitung die Herstellungstemperatur von der Umgebungstemperatur abweicht, wobei die während des Herstellungsprozesses erforderliche Temperaturänderung der Ausgangskomponenten mittels eines Wärmeenergiespenders erzielt wird, wobei der Wärmeenergiespender die Innenwand eines topfartigen Behälters auf die Herstellungstemperatur bringt und wobei ein Rührwerkzeug die Herstellungskomponenten während des Herstellungsprozesses durchmischt.

Ein derartiges kleines elektrisches Haushaltsgerät ist aus der DE-PS 35 44 671 (PHD 85-185) bekannt und dient dem Herstellen von gefrorenen Süßspeisen. Das Gerät weist einen doppelwandigen Behälter auf, bei dem der Hohlraum zwischen den Behälterwänden mit einem kühlbaren kältespeichernden Medium gefüllt ist. In den Behälter werden die für die Herstellung der betreffenden Süßspeise erforderlichen Ausgangskomponenten gegeben, wonach mit der Hand oder motorisch unter drehender Bewegung eines Rührwerkzeuges die Herstellung der Süßspeise unter Abkühlung, Durchmischung und Verfestigung der Ausgangskomponenten erfolgt.

Bei der Herstellung größerer Mengen der Speisen können sich Schwierigkeiten ergeben, eine gleichmäßige Durchmischung der Ausgangskomponenten zu erreichen, so daß eine unbefriedigende, nicht-homogene Konsistenz des Endproduktes die Folge ist. Ein weiterer Nachteil liegt bei der Herstellung größerer Eismengen darin, daß das Eis nach der Entnahme aus dem Gerät zu schmelzen beginnt und der Verzehrungsgenuß beeinträchtigt wird.

Überdies ist es im Rahmen eines ansprechenden Desserts erwünscht, nicht nur eine Sorte der Süßspeise zu servieren, sondern durch unterschiedliche Geschmacksrichtungen oder unterschiedliche Ausgangskomponenten mit abweichenden Zubereitungsparametern das Angebot und die Auswahlmöglichkeit zu bereichern. Dies ist auch dann der Fall, wenn diätetische oder gesundheitliche Gesichtspunkte berücksichtigt werden müssen, die nur einen Teil der Konsumenten betreffen.

Auch bei der Herstellung kleinerer Mengen der Speise, bei denen der Innenraum des Behälters nur teilweise gefüllt ist, können sich Schwierigkeiten hinsichtlich der Konsistenz ergeben, z. B. weil der Abkühlungsvorgang dann zu schnell erfolgt.

Aus der DE-OS 28 25 997 ist es für die Eisbereitung bekannt, zwei Behälter nebeneinander anzuordnen und über einen einzigen Motor die Rührer in beiden Behältern gemeinsam anzutreiben.

Damit sind aber unterschiedliche Herstellungsparameter in den einzelnen Behältern nicht realisierbar.

Es ist Aufgabe der Erfindung, ein kleines elektrisches Haushaltsgerät der eingangs genannten Art zu schaffen, bei dem nach Wahl größere oder kleinere Mengen einer gewünschten Speise mit gleich guter Durchmischung und Konsistenz hergestellt werden können und eine Wahlmöglichkeit hinsichtlich der herzustellenden Menge und der Zubereitungsparameter besteht, um verschiedenen Anforderungen genügen zu können.

Die gestellte Aufgabe ist erfindungsgemäß dadurch gelöst, daß wenigstens zwei topfartige Behälter in einem gemeinsamen Umbehälter angeordnet sind, in dem sich Wärmeenergiespender in Kontakt mit den Behältern befinden, und daß jedem topfartigen Behälter ein eigenes Rührwerkzeug zugeordnet ist, wobei die zum Mischen erforderliche Relativgeschwindigkeit des jeweiligen Rührwerkzeuges gegenüber dem zugeordneten topfförmigen Behälter mittels unabhängiger Antriebsvorrichtungen mit eigenen elektrischen Motoren erzielbar ist.

Durch das Nebeneinander-Anordnen von mehreren topfförmigen Behältern in einem gemeinsamen Umbehälter und dem Einsatz von getrennten Antrieben lassen sich in einer kompakten Einheit gleichzeitig oder zu unterschiedlichen Zeiten unterschiedliche Speisen unter unterschiedlichen Bedingungen mischen. Größere oder kleinere Mengen einer gewünschten Speise lassen sich somit mit gleich guter Durchmischung und Konsistenz herstellen, wobei eine breite Wahlmöglichkeit hinsichtlich der herzustellenden Mengen besteht und Speicherprobleme vermieden sind. Außerdem ergibt sich die Möglichkeit, gleichzeitig gesundheitlichen oder diätetischen Gesichtspunkten zu entsprechen. So kann beispielsweise bei Diabetikern auf den Einsatz von Zucker verzichtet werden. Die kompakte Bauweise ist raumsparend und wirtschaftlicher als der Einsatz von zwei völlig unabhängigen Geräten.

Nach einer weiteren Ausgestaltung der Erfindung ist vorgesehen, daß der Wärmeenergiespender ein Wärmeenergiespeichermittel ist, das vor Beginn des Herstellungsprozesses in einen Ausgangszustand gebracht wird, in welchem es die für die Herstellung der Speisen erforderliche Energie gespeichert hat und diese dann an die Speisen abgibt. Der Einsatz derartiger Wärmeenergiespeicher, die beispielsweise in einer Kühltruhe oder in dem Kühlfach eines Kühlschrankes auf die gewünschte Temperatur gekühlt werden können, ist wirtschaftlicher als der Einsatz von besonderen Kühlaggregaten. Außerdem wird die Arbeitstemperatur bei der Verwendung derartiger Wärmeenergiespeicher automatisch eingehalten.

Nach einer weiteren Ausgestaltung der Erfindung ist vorgesehen, daß die Temperatur des Wärmeenergiespeichermittels, bei der sich sein Aggregatzustand ändert, eingestellt ist auf die erforderliche Herstellungstemperatur der jeweiligen Speise. Man kann dabei zu besonders kleinen Wärmeenergiespendern kommen, weil die spezifischen Eigenschaften des Wärmeenergiespeichermittels sinnvoll ausnutzbar sind, weil immer mit der jeweilig richtigen Aggregatzustandsänderung gearbeitet wird, wodurch die Umwandlungsenergie optimal ausgenutzt wird.

Nach einer weiteren Ausgestaltung der Erfindung ist vorgesehen, daß der Wärmeeneregiespender ein elektrisch betriebenes Heizaggregat ist. Bei einer Wärmebehandlung ist die Energieerzeugung nicht so kritisch, weshalb in einem solchen Fall auch auf elektrisch betriebene Heizaggregate zurückgegriffen werden kann.

Nach einer weiteren Ausgestaltung der Erfindung ist vorgesehen, daß jeder Behälter mit einem eigenen Wärmeenergiespender versehen ist, wobei deren Betriebstemperatur voneinander unabhängig ist. Eigene Wärmeenergiespender für die einzelnen Behälter gestatten gleichzeitig unterschiedliche Wärmebehandlungen.

Nach einer weiteren Ausgestaltung der Erfindung ist vorgesehen, daß der Wärmeenergiespender zum
– Herstellen von Speiseeis auf eine Betriebstemperatur von -12°C bis -24°C ausgelegt ist,
– Kaltrühren auf eine Betriebstemperatur von -0°C bis +10°C ausgelegt ist,
– Warmhalten auf eine Betriebstemperatur von +30°C bis +50°C ausgelegt ist,
– Herstellen von kremigen Soßen auf eine Betriebstemperatur von +60°C bis +90°C ausgelegt ist.

Nach einer weiteren Ausgestaltung der Erfindung ist vorgesehen, daß die Rührgeschwindigkeit unterschiedlich ist. Damit können auch unterschiedliche Speisen mit unterschiedlichen Rührgeschwindigkeiten gleichzeitig hergestellt werden.

Nach einer weiteren Ausgestaltung der Erfindung ist vorgesehen, daß für die unterschiedlichen Rührgeschwindigkeiten schaltbare Getriebe vorgesehen sind. Derartige schaltbare Getriebe stellen eine konstruktiv einfache Lösung dar.

Nach einer weiteren Ausgestaltung der Erfindung ist vorgesehen, daß der Umbehälter getrennte Antriebsvorrichtungen für die einzelnen topfartigen Behälter mit eigenen elektrischen Motoren aufweist. Ebenso ist es aber auch möglich, daß die einzelnen Rührwerke eigene Antriebsvorrichtungen mit eigenen elektrischen Motoren aufweisen. Selbstverständlich ist es auch möglich, daß sowohl die topfförmigen Behälter als auch die Rührwerkzeuge mit Antriebsvorrichtungen versehen sind. Welche Antriebsart ausgewählt wird, ist abhängig von den Design-Vorstellungen des Formgestalters. Weiterhin spielen die Eigenschaften der antreibenden Elektromotoren eine Rolle. Als besonders vorteilhaft für die Formgebung ist es, wenn die elekrischen Motoren zweipolige Einphasensynchronmotoren mit dauermagnetischen Läufern sind. Dieser Motor ist besonders kleinbauend. Bei dem Einsatz mehrerer Motoren in einem Gerät kann dies eine ausschlaggebende Bedeutung haben.

Die Erfindung wird anhand der Zeichnungen näher dargestellt. Es zeigen:

Fig. 1 ein kleines elektrisches Haushaltsgerät mit zwei in einem Umtopf nebeneinander angeordneten topfförmigen Behältern und in diese Behälter eingreifenden Rührwerkzeugen, die an Antriebsarmen gehalten sind,

Fig. 2 einen Teilschnitt durch einen doppelwandigen topfförmigen Behälter, der in einen Umtopf eingesetzt ist, wobei nur eine Hälfte des Gerätes nach Fig. 1 geschnitten dargestellt ist,

Fig. 3 im Schnitt einen einwandigen topfförmigen Behälter, der in einem Umtopf angeordnet ist, der eine Aufnahme für den topfförmigen Behälter aufweist, an der eine elektrische Heizvorrichtung vorgesehen ist; der topfförmige Behälter ist dabei mittels eines am Boden des Umbehälters angeordneten Antriebes drehbar,

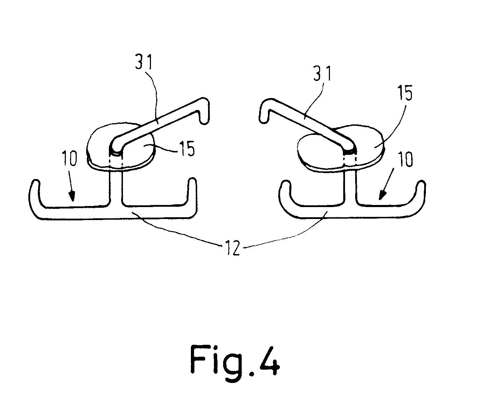

Fig. 4 zwei Rührwerkzeuge ohne Antrieb, die für den vom Boden her gedrehten topfförmigen Behälter nach Fig. 3 geeignet sind.

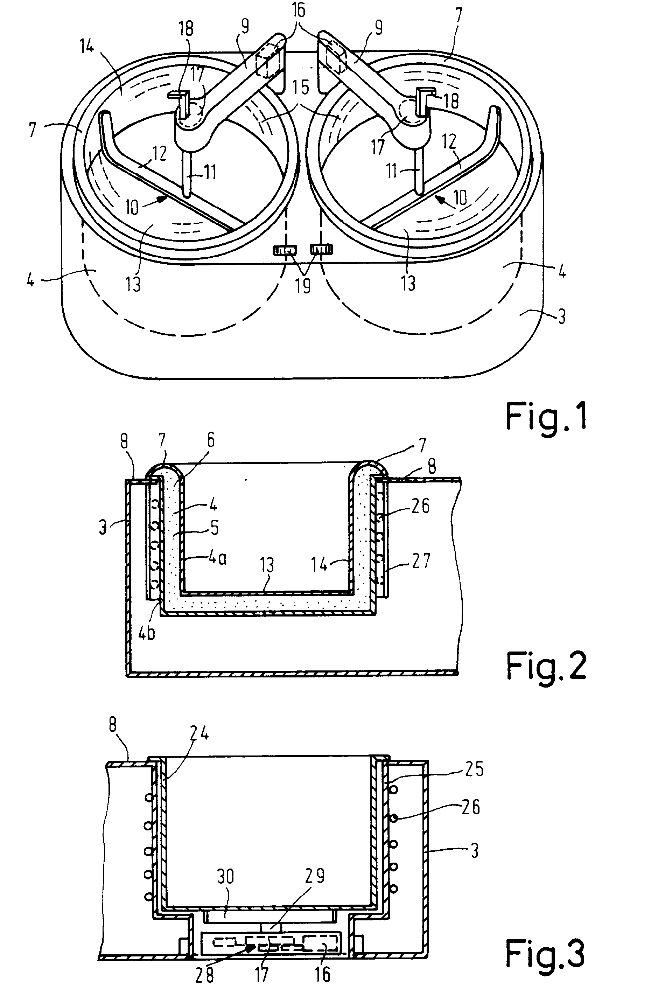

Das in Fig. 1 dargestellte kleine elektrische Haushaltsgerät dient zum Herstellen von Speisen, die gerührt werden müssen. Dazu ist das Haushaltsgerät mit einem Umtopf 3 versehen, in den nebeneinander zwei topfförmige Behälter 4 eingesetzt sind. In die Behälter können Bodenplatten eingelegt werden, die ein Wärmeenergiespeichermittel enthalten. Wie Fig. 2 zeigt, können die topfförmigen Behälter 4 auch eine Innenwand 4a und eine Außenwand 4b aufweisen, wobei der Hohlraum 5 zwischen Innenwand 4a und Außenwand 4b mit einem Wärmeenergiespeichermittel 6 gefüllt ist. Jeder der topfförmigen Behälter 4 ist in den gemeinsamen Umbehälter 3 eingesetzt, wobei die Behälter 4 mit einem Kragen 7 auf der Oberseite 8 des Umbehälters 3 aufsitzen.

Wie Fig. 1 zeigt, sind Antriebsarme 9 vorgesehen, die Rührwerkzeuge 10 antreiben. Die Rührwerkzeuge 10 bestehen aus einer vertikalen Antriebswelle 11, die mit Rührarmen 12 versehen ist, die am Boden 13 und an der Wand 14 der topfförmigen Behälter 4 schabend und rührend drehbar entlang fahrbar sind. Die Antriebsarme 9 sind am Umbehälter 3 durch Einklinken oder Einrasten lösbar festgelegt. Die Antriebswellen 11 greifen durch der Übersichtlichkeit nur gestrichelt angedeutete Deckel 15. Die Deckel sind an den Antriebsarmen 9 festgelegt und mit diesen abnehmbar. In den Antriebsarmen 9 sind Antriebsmotoren 16 untergebracht, die über Getriebe 17 die Antriebswellen 11 in Umlauf versetzen. Die Motoren 16 und Getriebe 17 sind nur schraffiert schematisch dargestellt. Die Getriebe 17 sind so ausgebildet, daß sie verschiedene Rührgeschwindigkeiten erzeugen können. Die verschiedenen Rührgeschwindigkeiten lassen sich mittels Umschalthebeln 18 einstellen. Die Getriebe 17 sind dazu als Schaltgetriebe ausgelegt. Die elektrische Einschaltung der Motoren 16 in den Antriebsarmen 9 erfolgt mittels Schaltern 19, die unabhängig voneinander betätigt werden können.

In dem Umbehälter 3 können, wie Fig. 1 zeigt, zwei topfförmige Behälter 4 nebeneinander angeordnet sein. Eine solche Ausführung wird vorzugsweise für eine Kältebehandlung eingesetzt werden.

Fig. 3 zeigt eine Abwandlung des Haushaltsgerätes, wobei der topfförmige Behälter 24 einwandig ausgebildet ist. Dieser einwandige topfförmige Behälter 24 sitzt in einem Einsatz 25, der ebenfalls in den Umbehälter 3 eingesetzt ist. Dieser Einsatz 25 ist auf seiner Außenseite mit einer Heizspirale 26 versehen.

In Fig. 2 ist angedeutet, daß die Heizspirale 26 oder auch eine andere Heizung unmittelbar auf der Außenwand 4b des topfförmigen Behälters 4 angebracht sein kann. In diesem Fall ist die Doppelwandigkeit des topfförmigen Behälters 4 nicht unbedingt erforderlich. Die Doppelwandigkeit ist aber dennoch von Vorteil, weil dann bei dem Wärmeenergiespeichermittel der Phasensprung im gewünschten Temperaturbereich ausgenutzt werden kann. Aus Sicherheitsgründen wird über der Heizspirale 26 oder der Heizung eine Schutzwand 27 angeordnet sein.

Beide Arten von topfförmigen Behältern 4 und 24 mit oder ohne Heizung können nebeneinander in dem Umtopf 3 zum Einsatz kommen. Je nach Anwendungszweck ist es aber selbstverständlich auch denkbar, jeweils zwei topfförmige Behälter 4 oder 24 nebeneinander zu verwenden.

Wie Fig. 3 zeigt, ist es möglich, den topfförmigen Behälter 24 in dem Umbehälter zu drehen. Dazu ist in dem Umbehälter 3 eine Antriebseinheit 28 mit angedeutetem Motor 16 und Getriebe 17 vorgesehen. Eine aus der Antriebseinheit 28 nach oben herausstehende Welle 29 trägt einen Drehteller 30, auf dem der topfförmige Behälter 24 aufsitzt. Der topfförmige Behälter 24 sitzt bei dieser Konstruktion nicht fest auf der Oberseite 8 des Umbehälters 3 auf. In der gleichen Weise, wie es in Fig. 3 dargestellt ist, kann natürlich auch der topfförmige Behälter 4 nach Fig. 2 von unten her drehend angetrieben werden mit Hilfe einer Antriebseinheit 28.

Wenn der topfförmige Behälter 4 oder 24 von der unten angeordneten Antriebseinheit 28 in Drehung versetzt wird, dann brauchen die Rührwerkzeuge 10 nicht unbedingt angetrieben zu werden. In diesem Fall können die Rührwerkzeuge 10 über eine starre Verbindung 31 an dem Umbehälter festgelegt und gegen Drehung gesichert werden. Auch diese starren Verbindungen 31 können die Deckel 15 lösbar tragen, so daß die Deckel 15 auch bei diesem Ausführungsbeispiel mit den Rührwerkzeugen 10 und starren Verbindungen 31 abgenommen werden können. Entsprechend den jeweiligen Bedürfnissen sind natürlich auch Kombinationen möglich aus Antrieb über die Antriebseinheit 28 allein, über die Antriebsarme 9 allein oder über die Antriebseinheit 28 und die Antriebsarme 9 gemeinsam.

Bei dem Gerät kann jeder topfförmige Behälter 4, 24 mit einem eigenen Wärmeenergiespender versehen sein, wobei deren Betriebstemperatur voneinander unabhängig ist. So ist es möglich, daß der Wärmeenergiespender zum Herstellen von Speiseeis auf eine Temperatur von -12°C bis -24°C ausgelegt ist. Zum Kaltrühren kann er auf eine Betriebstemperatur von 0°C bis +10°C ausgelegt sein. Zum Warmhalten empfiehlt sich eine Auslegung auf eine Betriebstemperatur von 30°C bis 50°C. Wenn der Wärmeenergiespender ein Wärmespeichermittel ist, dann wird dieses vor Beginn des Herstellungsprozesses beispielsweise in einer Tiefkühltruhe oder in einem Tiefkühlfach in einen Ausgangszustand gebracht, in welchem er die für die Herstellung der Speisen erforderliche Energie gespeichert hat und diese dann an die Speisen abgibt. Für Wärmebehandlungen kann das Wärmeenergiespeichermittel durch Erhitzen in einem Wasserbad auf die gewünschte Ausgangstemperatur gebracht werden.

Als elektrische Antriebsmotoren 16 kommen vorzugsweise zweipolige Einphasensynchronmotoren mit dauermagnetischen Läufern in Betracht. Derartige Einphasensynchronmotoren sind besonders kleinbauend und eignen sich deshalb besonders für einen mehrfachen Einsatz in einem Gerät.

## Patentansprüche

1. Kleines elektrisches Haushaltsgerät zur Herstellung von Speisen durch rührendes Mischen von zu Arbeitsbeginn leicht flüssigen Ausgangskomponenten, bei deren Zubereitung die Herstellungstemperatur von der Umgebungstemperatur abweicht, wobei die während des Herstellungsprozesses erforderliche Temperaturänderung der Ausgangskomponenten mittels eines Wärmeenergiespenders erzielt wird, wobei der Wärmeenergiespender (6) die Innenwand (4a) eines topfartigen Behälters (4, 24) auf die Herstellungstemperatur bringt und wobei ein Rührwerkzeug (10) die Herstellungskomponenten während des Herstellungsprozesses durchmischt, <u>dadurch gekennzeichnet</u>, daß wenigstens zwei topfartige Behälter (4, 24) in einem gemeinsamen Umbehälter (3) angeordnet sind, in dem sich Wärmeenergiespender (6) in Kontakt mit den Behältern (4, 24) befinden, und daß jedem topfartigen Behälter (4, 24) ein eigenes Rührwerkzeug (10) zugeordnet ist, wobei die zum Mischen erforderliche Relativgeschwindigkeit des jeweiligen Rührwerkzeuges (10) gegenüber dem zugeordneten topfförmigen Behälter (4, 24) mittels unabhängiger Antriebsvorrichtungen (9, 28) mit eigenen elektrischen Motoren (16) erzielbar ist.

2. Kleines elektrisches Haushaltsgerät nach Anspruch 1, <u>dadurch gekennzeichnet</u>, daß der Wärmeenergiespender (6) ein Wärmeeinergiespeichermittel ist, das vor Beginn des Herstellungsprozesses in einen Ausgangszustand gebracht wird, in welchem er die für die Herstellung der Speisen erforderliche Energie gespeichert hat und diese dann an die Speisen abgibt.

3. Kleines elektrisches Haushaltsgerät nach Anspruch 2, <u>dadurch gekennzeichnet</u>, daß die Temperatur des Wärmeenergiespeichermittels (6), bei der sich sein Aggregatzustand ändert, eingestellt ist auf die erforderliche Herstellungstemperatur der jeweiligen Speise.

4. Kleines elektrisches Haushaltsgerät nach einem der Ansprüche 1 bis 3, <u>dadurch gekennzeichnet</u>, daß der Wärmeenergiespender (6) ein elekrisch betriebenes Heizaggregat (26) ist.

5. Kleines elekrisches Haushaltsgerät nach einem der Ansprüche 1 bis 4, <u>dadurch gekennzeichnet</u>, daß jeder Behälter (4, 24) mit einem eigenen Wärmeenergiespender (6) versehen ist, wobei deren Betriebstemperatur voneinander unabhängig ist.

6. Kleines elektrisches Haushaltsgerät nach einem der Ansprüche 1 bis 4, <u>dadurch gekennzeichnet</u>, daß der Wärmeenergiespender (6) zum
   – Hertellen von Speiseeis auf eine Betriebstemperatur von -12°C bis -24°C ausgelegt ist,
   – Kaltrühren auf eine Betriebstemperatur von -0°C bis +10°C ausgelegt ist,
   – Warmhalten auf eine Betriebstemperatur von +30°C bis +50°C ausgelegt ist,
   – Herstellen von kremigen Soßen auf eine Betriebstemperatur von +60°C bis +90°C ausgelegt ist.

7. Kleines elektrisches Haushaltsgerät nach einem der Ansprüche 1 bis 3, <u>dadurch gekennzeichnet</u>, daß die Rührgeschwindigkeit unterschiedlich ist.

8. Kleines elektrisches Haushaltsgerät nach Anspruch 7, <u>dadurch gekennzeichnet</u>, daß für die unterschiedlichen Rührgeschwindigkeiten schaltbare Getriebe (17) vorgesehen sind.

9. Kleines elektrisches Haushaltsgerät nach Anspruch 1 und 7, <u>dadurch gekennzeichnet</u>, daß der Umbehälter (3) getrennte Antriebsvorrichtungen (9, 28) für die einzelnen topfartigen Behälter (4, 24) mit eigenen elekrischen Motoren (16) aufweist.

10. Kleines elektrisches Haushaltsgerät nach Anspruch 1 und 7, <u>dadurch gekennzeichnet</u>, daß die einzelnen Rührwerke (10) eigene Antriebsvorrichtungen (9, 28) mit eigenen elektrischen Motoren (16) aufweisen.

11. Kleines elektrisches Haushaltsgerät nach Anspruch 9 oder 10, <u>dadurch gekennzeichnet</u>, daß sowohl die topfförmigen Behälter (4, 24) als auch die Rührwerkzeuge (10) mit Antriebsvorrichtungen (9, 28) versehen sind.

12. Kleines elekrisches Haushaltsgerät nach einem der Ansprüche 1 bis 11, <u>dadurch gekennzeichnet</u>, daß die elektrischen Motoren (16) zweipolige Einphasensynchronmotoren mit dauermagnetischen Läufern sind.

## Claims

1. A small domestic electric appliance for the preparation of foods by mixing while stirring from original ingredients which are fluidly liquid at the start of work, in the preparation of which foods the preparation temperature deviates from the ambient temperature, the temperature change in the original ingredients which is required during preparation being achieved by means of a thermal energy dispenser, the thermal energy dispenser (6) bringing the inner wall (4a) of a bowl-type container (4, 24) to the preparation temperature and a stirring tool (10) mixing the ingredients during preparation, characterized in that at least two bowl-type containers (4, 24) are arranged in a common surrounding container (3) in which there are thermal energy dispensers (6) in contact with the containers (4, 24), and in that an individual stirring tool (10) is assigned to each bowl-type container (4, 24), it being possible to achieve the relative speed, necessary for mixing, of the respective stirring tool (10) in relation to the associated bowl-type container (4, 24) by means of independent drive devices (9, 28) with their own electric motors (16).

2. A small domestic electric appliance as claimed in Claim 1, characterized in that the thermal energy dispenser (6) is a thermal energy storage means which, before the start of the preparation is brought into an initial state in which it has stored the energy necessary for the preparation of the foods, and then imparts this energy to the foods.

3. A small domestic electric appliance as claimed in Claim 2, characterized in that the temperature of the thermal energy storage means (6) at which its state of aggregation changes is adjusted to the preparation temperature required for the respective food.

4. A small domestic electric appliance as claimed in any one of Claims 1 to 3, characterized in that the thermal energy dispenser (6) is an electrically operated heating unit (26).

5. A small domestic electric appliance as claimed in any one of Claims 1 to 4, characterized in that each container (4, 24) is provided with its own thermal energy dispenser (6), whose operating temperatures are independent of one another.

6. A small domestic electric appliance as claimed in any one of Claims 1 to 4, characterized in that the thermal energy dispenser (6) is designed for
   - preparation of ice cream at an operating temperature of - 12°C to -24°C
   - cold stirring at an operating temperature of -0°C to +10°C,
   - keeping warm at an operating temperature of +30°C to +50°C,
   - preparation of creamy sauces at an operating temperature of + 60°C to +90°C.

7. A small domestic electric appliance as claimed in any one of Claims 1 to 3, characterized in that the stirring speeds are different.

8. A small domestic electric appliance as claimed in Claim 7, characterized in that switchable transmission gears (17) are provided for the various stirring speeds.

9. A small domestic electric appliance as claimed in Claims 1 and 7, characterized in that the surrounding container (3) has separate drive devices (9, 28) for the individual bowl-type containers (4, 24) with their own electric motors (16).

10. A small domestic electric appliance as claimed in Claims 1 and 7, characterized in that the individual stirring mechanisms (10) have their own drive devices (9, 28) with their own electric motors (16).

11. A small domestic electric appliance as claimed in Claim 9 or 10, characterized in that both the bowl-type containers (4, 24) and the stirring tools (10) are provided with drive devices (9, 28).

12. A small domestic electric appliance as claimed in any one of Claims 1 to 11, characterized in that the electric motors (16) are bipolar single-phase synchronous motors with permanent magnetic armatures.

**Revendications**

1. Petit appareil électroménager pour la confection, par mélange rotatif de constituents de départ très fluides au début de l'opération, de mets pour la préparation desquels la température de confection diffère de la température ambiante, la variation de température des constituants de départ qui est nécessaire pendant le processus de confection étant atteinte au moyen d'un dispensateur d'énergie thermique, ce dispensateur d'énergie thermique (6) amenant la paroi interne (4a) d'un récipient en forme de cuvette (4, 24) à la température de confection et un outil mélangeur rotatif (10) mélangeant intimement les constituants pendant le processus de confection, caractérisé en ce qu'au moins deux récipients en forme de cuvette (4, 24) sont installés dans un récipient-enveloppe (3) commun, dans lequel se trouvent des dispensateurs d'énergie thermique (6) qui sont en contact avec les récipients (4, 24), et qu'à chaque récipient en forme de cuvette (4, 24) est associé un outil mélangeur propre (10), la vitesse relative nécessaire pour le mélange, de l'outil mélangeur (10) par rapport au récipient en forme de cuvette (4, 24) associé, pouvant être atteinte au moyen de dispositifs d'entraînement indépendants (9, 28) équipés de moteurs électriques propres (16).

2. Petit appareil électroménager suivant la revendication 1, caractérisé en ce que le dispensateur d'énergie thermique (6) est un agent accumulateur d'énergie thermique qui, avant le début du processus de confection, est amené dans un état initial dans lequel il a stocké l'énergie nécessaire pour la production des mets pour la restituer ensuite aux mets.

3. Petit appareil électroménager suivant la revendication 2, caractérisé en ce que la température de l'agent accumulateur d'énergie thermique (6), à laquelle son état physique se modifie, est réglée sur la température de confection nécessaire pour le mets en question.

4. Petit appareil électroménager suivant l'une quelconque des revendications 1 à 3, caractérisé en ce que le dispensateur d'énergie thermique (6) est un dispositif de chauffage électrique (26).

5. Petit appareil électroménager suivant l'une quelconque des revendications 1 à 4, caractérisé en ce que chaque récipient (4, 24) est pourvu d'un dispensateur d'énergie thermique propre (6), leurs températures de travail étant indépendantes l'une de l'autre.

6. Petit appareil électroménager suivant l'une quelconque des revendications 1 à 4, caractérisé en ce que le dispensateur d'énergie thermique (6) est conçu pour :
   – confectionner des glaces à une température de travail de -12°C à -24°C,
   – mélanger à froid à une température de travail de -0°C à +10°C,
   – tenir chaud à une température de travail de +30°C à +50°C,
   – confectionner des sauces crémeuses à une température de travail de +60°C à +90°C.

7. Petit appareil électroménager suivant l'une quelconque des revendications 1 à 3, caractérisé en ce que les vitesses d'outil mélangeur sont différentes.

8. Petit appareil électroménager suivant la revendication 7, caractérisé en ce que des engrenages commutables (17) sont prévus pour les diverses vitesses d'outil mélangeur.

9. Petit appareil électroménager suivant les revendications 1 et 7, caractérisé en ce que le récipient-enveloppe (3) comporte, pour les récipients en forme de cuvette individuels (4, 24), des dispositifs d'entraînement (9, 28) séparés à moteurs électriques propres (16).

10. Petit appareil électroménager suivant les revendications 1 et 7, caractérisé en ce que les outils mélangeur individuels (10) comportent des dispositifs d'entraînement propres (9, 28) à moteurs électriques propres (16).

11. Petit appareil électroménager suivant les revendications 9 ou 10, caractérisé en ce que les récipients en forme de cuvette (4, 24), de même que les outils mélangeur (10) sont pourvus de dispositifs d'entraînement (9, 28).

12. Petit appareil électroménager suivant l'une quelconque des revendications 1 à 11, caractérisé en ce que les moteurs électriques ( 16) sont des moteurs synchrones monophasés bipolaires à rotors présentant une aimantation permanente.

Fig.1

Fig.2

Fig.3

Fig.4